# EUROPEAN PATENT APPLICATION

(11) **EP 4 668 110 A1**
(43) Date of publication of application: **24.12.2025**
(21) Application number: 23928625.5
(22) Date of filing: 22.03.2023
(51) Int. Cl.: G06F 9/48, G06F 8/41, G06F 11/36

(54) **INTERRUPTION SIMULATION DEVICE, INTERRUPTION SIMULATION METHOD, AND INTERRUPTION SIMULATION PROGRAM**

(71) Applicant: MITSUBISHI ELECTRIC CORPORATION, Chiyoda-ku Tokyo 100-8310 (JP)
(72) Inventor: YAMASHITA, Yuya, Tokyo 100-8310 (JP)
(74) Representative: Pfenning, Meinig & Partner mbB
(86) International application number: PCT/JP2023/011194
(87) International publication number: WO 2024/195044

(57) **Abstract**

An interrupt simulation device (10) includes an accumulation addition unit (14) and a branch addition unit (15). The accumulation addition unit (14) adds an accumulation addition process to add a value corresponding to an estimated execution time of a target basic block to a counter variable corresponding to a cumulative execution time of a target program (20) when the target basic block is executed in the target program (20) in a case in which each basic block of multiple basic blocks are regarded as the target basic block when the target program (20) being a computer program is divided into the multiple basic blocks. The branch addition unit (15) adds a conditional branching process that is executed when a value of the counter variable satisfies an ignition reference condition, to the target program (20).

## Description

### Technical Field

The present disclosure relates to an interrupt simulation device, an interrupt simulation method and an interrupt simulation program.

### Background Art

In development of embedded programs, there are occasions where development of an embedded program is advanced under such a circumstance that an actual machine which serves as an operating environment for the embedded program cannot be prepared at hand. In addition, since real-time property is required for the embedded program in many cases, it is important to estimate the execution time of the embedded program from an early stage of development of the embedded program. If the actual machine cannot be prepared at an early stage of the development, it is common to use an emulator or a simulator to estimate the execution time of the embedded program.

However, there is a problem in using an emulator or a simulator that it takes a long time to estimate the execution time of the embedded program since runtime overhead due to emulation or simulation occurs.

Patent Literature 1 presents a method to estimate the execution time of an embedded program without using an emulator or a simulator by using program analysis technology with a compiler, as a technique to solve this problem.

### Citation List

### Patent Literature

Patent Literature 1: WO2010/001766 pamphlet

### Summary of Invention

### Technical Problem

There are some embedded programs that utilize interrupts. The interrupt is a mechanism that executes a predetermined process triggered by occurrence of an interrupt event. The interrupt event is an external event such as ignition of a timer.

Now, the method presented in Patent Literature 1 has a problem in that it is impossible to estimate the execution time of a program handling interrupts since the method does not include a mechanism to simulate the interrupt event. In a case of estimating the execution time of embedded program handling interrupts by using the said method, a problem occurs in the process of generating the branch history information illustrated in Fig. 3 of Patent Literature 1. For example, let us consider a case where a value of variable X is changed by ignition of a timer, and the value of variable X is awaited to change in the main process. In this case, since the branch history information generation process cannot simulate an ignition event of the timer, the process after the waiting process is not executed in the main process. Therefore, in this case, it is impossible to get an estimation result of the execution time as expected.

The present disclosure is aimed at realizing simulation of a timer interrupt event without using an emulator or a simulator by utilizing program analysis technology with a compiler. Here, a timer interrupt event is an interrupt event triggered by ignition of a timer.

### Solution to Problem

There is provided according to one aspect of the present disclosure an interrupt simulation device includes
an accumulation addition unit to add an accumulation addition process to add a value corresponding to an estimated execution time of a target basic block to a counter variable corresponding to a cumulative execution time of a target program when the target basic block is executed in the target program in a case in which each basic block of a plurality of basic blocks is regarded as the target basic block when the target program being a computer program is divided into the plurality of basic blocks, and
a branch addition unit to add a conditional branching process that is performed when a value of the counter variable satisfies an ignition reference condition, to the target program.

### Advantageous Effects of Invention

When a target program processed according to the present disclosure is executed, a cumulative execution time of the target program is managed using a counter variable, and a conditional branching process is executed when a value of the counter variable meets the trigger reference condition. Here, the conditional branching process corresponds to a timer interrupt event, while the cumulative execution time is a cumulative estimated execution time of each basic block. Each basic block may be obtained by dividing the target program by utilizing the program analysis technology with a compiler. Therefore, according to the present disclosure, it is possible to realize simulation of a timer interrupt event without using an emulator or a simulator, by utilizing the program analysis technology with the compiler.

### Brief Description of Drawings

Fig. 1 is a diagram illustrating a configuration example of an interrupt simulation device 10 according to First Embodiment.
Fig. 2 is a diagram describing a processed program 29 according to First Embodiment.
Fig. 3 is a diagram illustrating an example of a hardware configuration of the interrupt simulation device 10 according to First Embodiment.
Fig. 4 is a flowchart illustrating an operation of a definition addition unit 13 according to First Embodiment.
Fig. 5 is a diagram describing a target program 21 according to First Embodiment.
Fig. 6 is a flowchart illustrating an operation of an accumulation addition unit 14 according to First Embodiment.
Fig. 7 is a flowchart illustrating an operation of a branch addition unit 15 according to First Embodiment.
Fig. 8 is a diagram describing a configuration file 28 and a processed program 29 according to First Embodiment.
Fig. 9 is a diagram illustrating an example of a hardware configuration of the interrupt simulation device 10 according to a variation of First Embodiment.

### Description of Embodiments

In the description and drawings of the embodiment, the same elements and the corresponding elements are denoted by the same reference numerals. Descriptions of the elements with the same reference numerals are appropriately omitted or simplified. The arrows in the diagrams mainly indicate flows of data or processes. Further, "unit" may be appropriately replaced by "circuit", "step", "procedure", "process" or "circuitry".

### First Embodiment.

Hereafter, the present embodiment will be described in detail, with reference to drawings.

### *** Description of Configuration ***

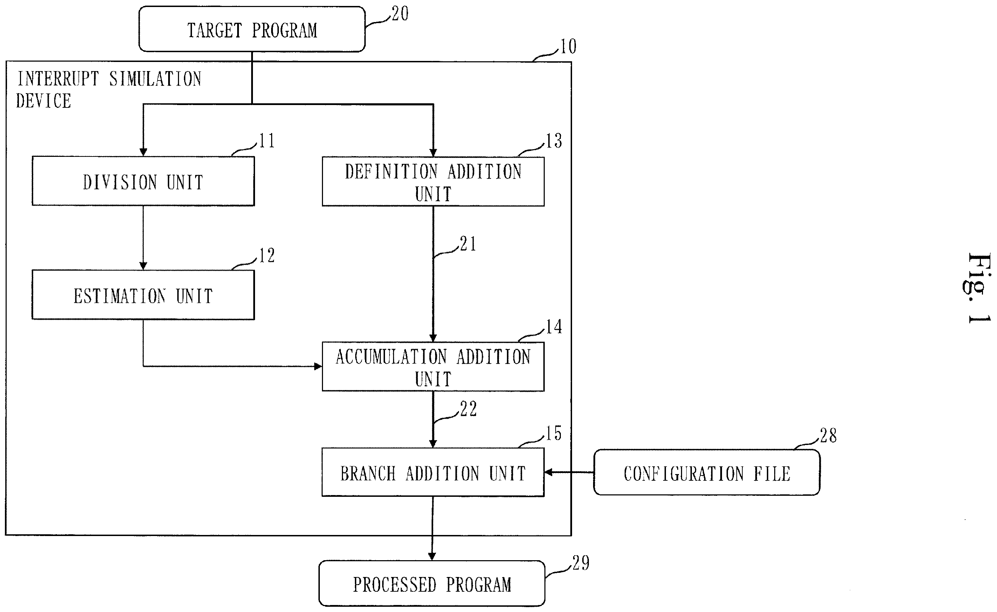

Fig. 1 illustrates an example of a software configuration of an interrupt simulation device 10. As illustrated in Fig. 1, the interrupt simulation device 10 includes a division unit 11, an estimation unit 12, a definition addition unit 13, an accumulation addition unit 14 and a branch addition unit 15.

The division unit 11 and the estimation unit 12 execute a static estimate process which statically estimates the execution time of each basic block included in a target program 20. The target program 20 is a computer program. In the present specification, the computer program is simply referred to as "program".

The definition addition unit 13, the accumulation addition unit 14 and the branch addition unit 15 add a process to simulate a timer interrupt event to the target program 20 based on the result of the static estimate process and a configuration file 28. The configuration file 28 is a file created by a user, for example.

The division unit 11 is a software module that receives the target program 20 as input, divides the target program 20 received into multiple basic blocks, and outputs a basic block set constituted by the multiple basic blocks divided. The target program 20 is a program being a target for measuring the execution time, which is in particular an embedded program.

The division unit 11 divides the target program 20 into multiple basic blocks using a known algorithm. The algorithm is provided, for instance, as a function of the open-source compiler infrastructure LLVM (Low Level Virtual Machine).

The estimation unit 12 is a software module that accepts the basic block set as input, estimates the execution time for each element of the basic block set received, and outputs the execution time estimated. The algorithm for estimating the execution time is disclosed in Patent Literature 1, for instance.

The definition addition unit 13 is a software module that adds a counter variable to the target program 20. Here, the counter variable is a variable that corresponds to a cumulative execution time of the target program 20, and is a global variable that holds a cumulative value of the current estimated execution time during execution of the target program 20.

The accumulation addition unit 14 is a software module that adds an accumulation addition process to the counter variable by the basic block unit. That is, when the target program is divided into multiple basic blocks, the accumulation addition unit 14 regards each basic block of the multiple basic blocks as a target basic block, and adds the accumulation addition process that corresponds to the target basic block in the target program. The accumulation addition process is a process that adds a value corresponding to the estimated execution time of the target basic block to the counter variable when the target basic block is executed. Through the accumulation addition process, the cumulative value of the current estimated execution time which is necessary for simulating ignition of the timer is accumulated. The term target program refers collectively to the target program 20, a target program 21 and a target program 22. The target program 22 is the target program 21 to which the accumulation addition process has been added by the accumulation addition unit 14. The target program 21 is the target program 20 to which the definition of the counter variable has been added by the definition addition unit 13.

The accumulation addition unit 14 may add an accumulation addition process corresponding to the target basic block at the end of the target basic block.

The branch addition unit 15 is a software module that adds a conditional branching process to simulate a timer interrupt event based on the configuration file 28. The conditional branching process may be a process executed when the value of the counter variable meets an ignition reference condition. The ignition reference condition may be any condition. The ignition reference condition may be a condition indicated in the configuration file 28; in other words, it may be a condition set from the outside. Further, the branch addition unit 15 outputs a program obtained by adding the conditional branching process to the target program as a processed program 29.

The branch addition unit 15 may add the conditional branching process at the end of the basic block corresponding to the conditional branching process.

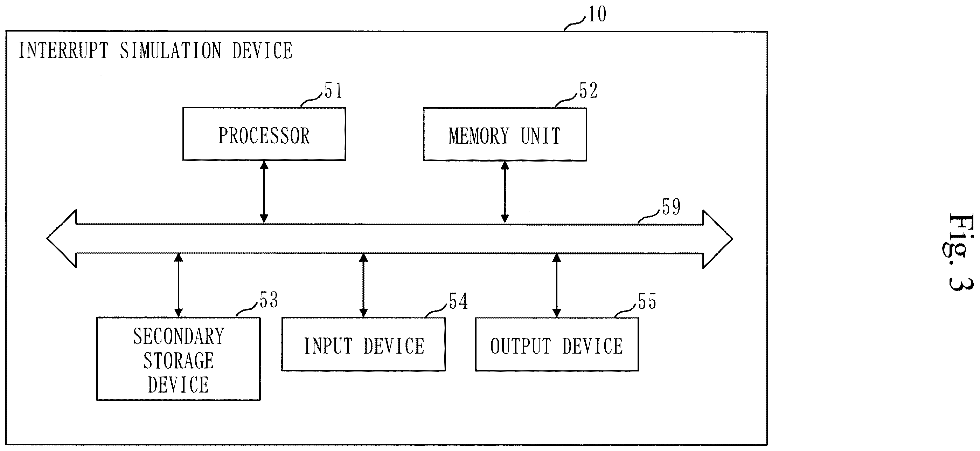

Moreover, by executing the processed program 29 on a computer with the hardware configuration illustrated in Fig. 3, it is possible to simulate the execution of the timer interrupt event. In the processed program 29, a basic block is a partial instruction subsequence of the program with only one branching instruction at the end. In the processed program 29, by accumulating the estimated execution time of each basic block that has passed during execution of the target program 20, it is possible to realize simulation of the timer interrupt event based on the estimated execution time.

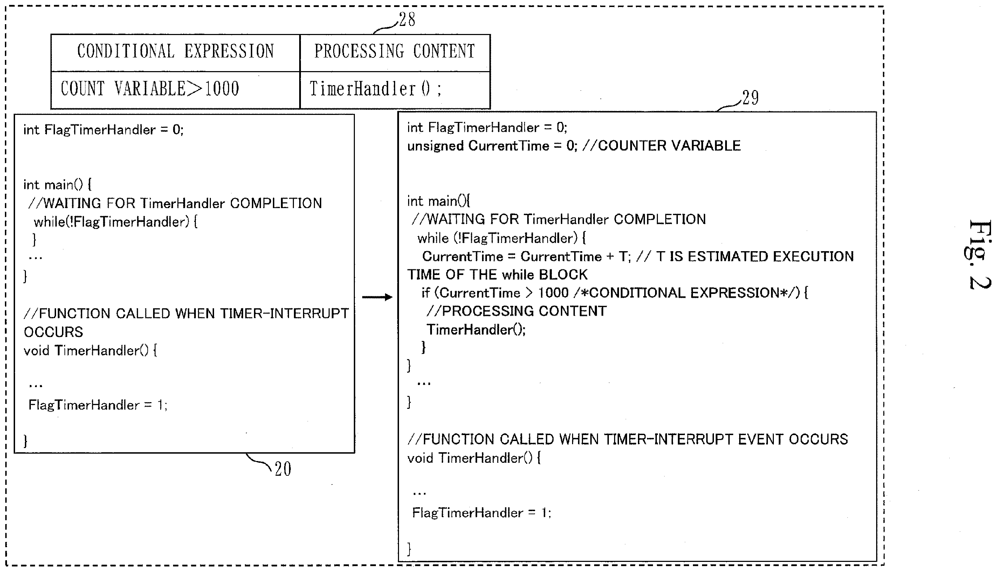

Fig. 2 is a diagram describing the processed program 29.

The target program 20 illustrated in Fig. 2 does not have a mechanism to simulate the timer interrupt event. Therefore, even if the target program 20 is executed on a computer, processing after the while statement corresponding to waiting for TimerHandler completion is not executed.

On the other hand, by processing the target program 20, the interrupt simulation device 10 generates the processed program 29 in which a simulation process of the timer interrupt event based on the configuration file 28 is added to the target program 20. When the processed program 29 is executed on a computer, the processing after the while statement corresponding to the waiting for TimerHandler completion is also executed.

Fig. 3 is a diagram illustrating an example of a hardware configuration of the interrupt simulation device 10. The interrupt simulation device 10 is a computer equipped with hardware components such as a processor 51, a memory unit 52, a secondary storage device 53, an input device 54, an output device 55 and a bus 59.

The processor 51 is a hardware unit that performs arithmetic operations and controls based on the instructions written in programs, which is a CPU (Central Processing Unit), for instance. The interrupt simulation device 10 may be equipped with multiple processors to replace the processor 51. These multiple processors share the role of the processor 51.

The memory unit 52 is a volatile storage device, which is a hardware unit to store program and data. The memory unit 52 is, for instance, a RAM (Random Access Memory).

The secondary storage device 53 is a non-volatile storage device, which is a hardware unit to store the interrupt simulation program and the configuration file 28. The secondary storage device 53 is, for instance, an HDD (Hard Disk Drive) or an SSD (Solid State Drive).

The input device 54 is a hardware unit by which users perform input to the system. The input device 54 is, for instance, a keyboard and a mouse.

The output device 55 is a hardware unit to transmit processing results from the system to the users. The output device 55 is, for instance, a display.

These hardware units are mutually connected through the bus 59.

The secondary storage device 53 stores an interrupt simulation program. The interrupt simulation program is a program that causes a computer to realize the functions of each part equipped in the interrupt simulation device 10. The functions of each part equipped in the interrupt simulation device 10 are realized by software. The interrupt simulation program may be recorded on a non-volatile recordable medium readable by computers. The non-volatile recordable medium is, for instance, an optical disc or flash memory. The interrupt simulation program may also be provided as a program product.

The processor 51 reads the interrupt simulation program stored in the memory unit 52, and executes arithmetic operations and controls, etc. in accordance with the instructions written in the interrupt simulation program. If the instruction is a memory read and write instruction, the processor 51 executes reading and writing of data with respect to the corresponding area of the memory unit 52. If the instruction is a file reading and writing instruction, the processor 51 executes reading and writing of files with respect to the corresponding area of the secondary storage device 53. If the instruction is an input instruction, the processor 51 acquires data from the input device 54, and writes the data acquired in the memory unit 52. If the instruction is an output instruction, the processor 51 acquires output target data from the memory unit 52, and outputs the output target data acquired to the output device 55.

### *** Description of Operation ***

The operation procedure of the interrupt simulation device 10 corresponds to an interrupt simulation method. Further, the program that realizes the operation of the interrupt simulation device 10 corresponds to an interrupt simulation program.

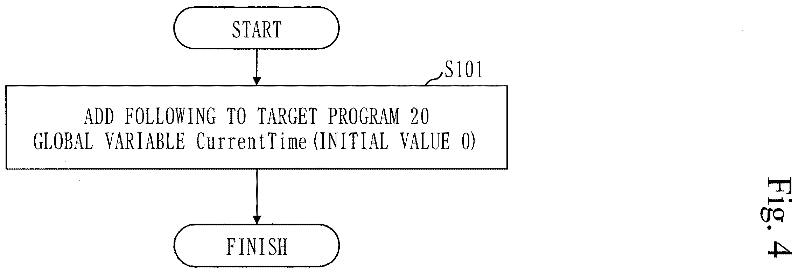

Fig. 4 is a flowchart illustrating an example the processing by the definition addition unit 13. The processing by the definition addition unit 13 will be described using Fig. 4.

### (Step S101)

The definition addition unit 13 receives the target program 20 as input, and adds the definition of the counter variable to a global variable area of the target program 20 received.

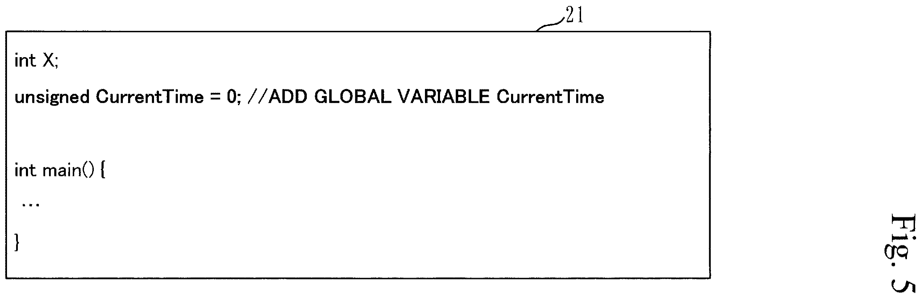

The definition addition unit 13 adds the definition of the counter variable in a format in accordance with the grammar of the language of the target program 20. For example, if the target program 20 is in C language, the definition statement of a global variable CurrentTime is added as the definition of the counter variable, as illustrated in Fig. 5. Additionally, 0 is set as the initial value of the counter variable.

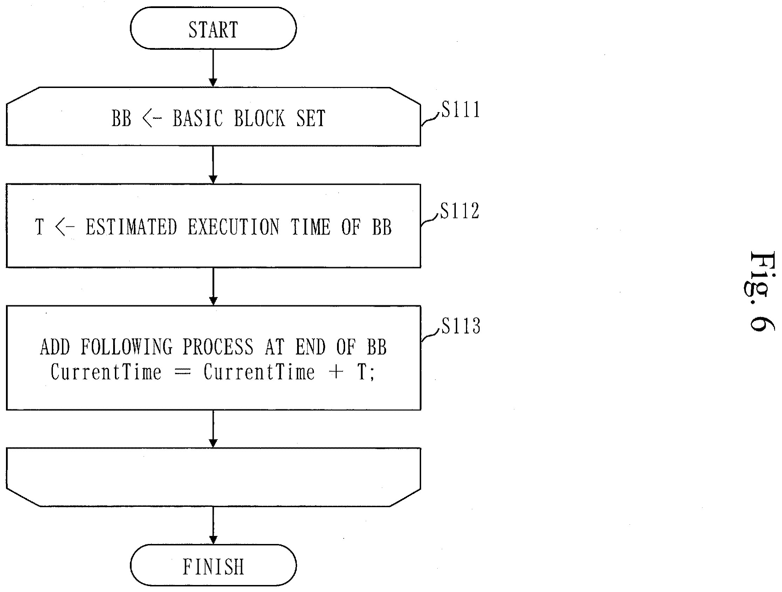

Fig. 6 is a flowchart that illustrates an example of processing by the accumulation addition unit 14. The processing by the accumulation addition unit 14 will be described using Fig. 6. Furthermore, it is assumed that, in the present flowchart, the processing by the division unit 11, the processing by the estimation unit 12 and the processing by the definition addition unit 13 have already been executed.

### (Step S111)

The present step is a loop for adding an accumulation addition process to each element of the basic block set.

The accumulation addition unit 14 receives the output of the estimation unit 12 and the output of the definition addition unit 13 as input. Further, the accumulation addition unit 14 selects one element of the basic block set as the target basic block in each iteration of the loop. Here, "BB" indicates a target basic block.

### (Step S112)

The accumulation addition unit 14 acquires an estimated execution time corresponding to the target basic block as a target execution time.

### (Step S113)

The accumulation addition unit 14 adds an accumulation addition process to the target basic block. For instance, the accumulation addition unit 14 adds a process that accumulates and adds a value corresponding to the target execution time to the counter variable at the end of the target basic block.

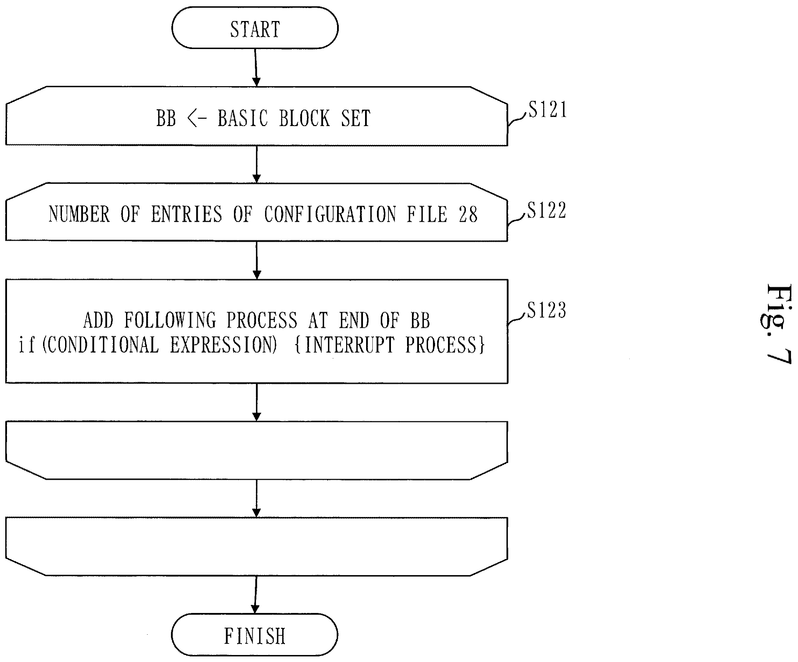

Fig. 7 is a flowchart illustrating an example of processing by the branch addition unit 15. The processing by the branch addition unit 15 will be described using Fig. 7.

In the present flowchart, the branch addition unit 15 receives the output from the accumulation addition unit 14 and the configuration file 28 as input, and adds conditional branches for simulating the interrupt event to the target program 22 based on the configuration file 28.

### (Step S121)

The present step is a loop for adding a conditional branch to each element of the basic block set.

The accumulation addition unit 14 selects one element of the basic block set as the target basic block in each iteration of the loop.

### (Step S122)

The present step is a loop for adding a conditional branch that corresponds to each entry indicated in the configuration file 28.

The branch addition unit 15 selects one entry indicated in the configuration file 28 as a target entry in each iteration of the loop.

### (Step S123)

The branch addition unit 15 adds a conditional branch corresponding to the target entry at the end of the target basic block.

As an example, the branch addition unit 15 acquires a conditional expression and a processing content of the conditional branch from the configuration file 28. Here, the conditional expression can describe a counter variable, and a global variable included in the target program 22. The processing content can describe a function call included in the target program 22.

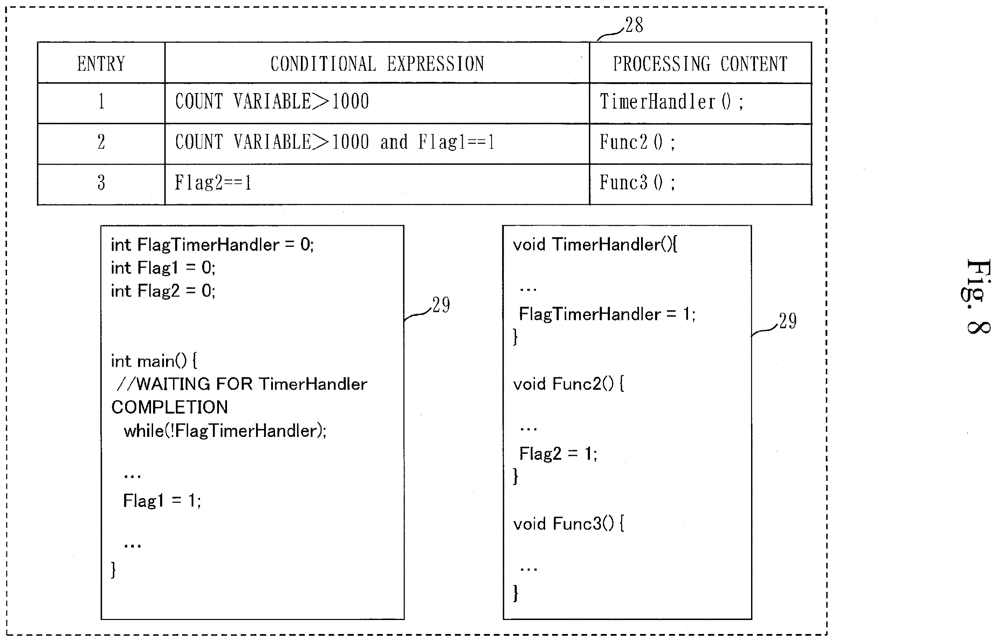

Fig. 8 illustrates a concrete example of the configuration file 28 and the processed program 29. In Fig. 8, the first entry is intended to simulate a timer interrupt event, i.e., ignition of the timer. Due to the description of the first entry, when the current estimated execution time exceeds 1000, a TimerHandler function is called. Furthermore, since a value of a FlagTimerHandler is set due to the call of the TimerHandler function, waiting for TimerHandler completion in the main function is released.

Additionally, as in the second and the third entries as illustrated in Fig. 8, it is possible to describe a global variable defined in the target program 20 in a conditional expression.

### ***Description of Effect of First Embodiment ***

As described above, according to the present embodiment, neither an actual machine that serves as an operating environment for a program, nor an emulator or a simulator with an interrupt model are necessary in simulating a timer interrupt event. Therefore, according to the present embodiment, even in the early stage of development when an actual machine and the like cannot be prepared, it is possible to simulate the timer interrupt event based on the elapsed time when the program is executed. Further, there is no runtime overhead due to emulation or simulation in the simulation of the timer interrupt event, which accelerates the simulation of the timer interrupt event.

### *** Other Configurations ***

### <First Variation>

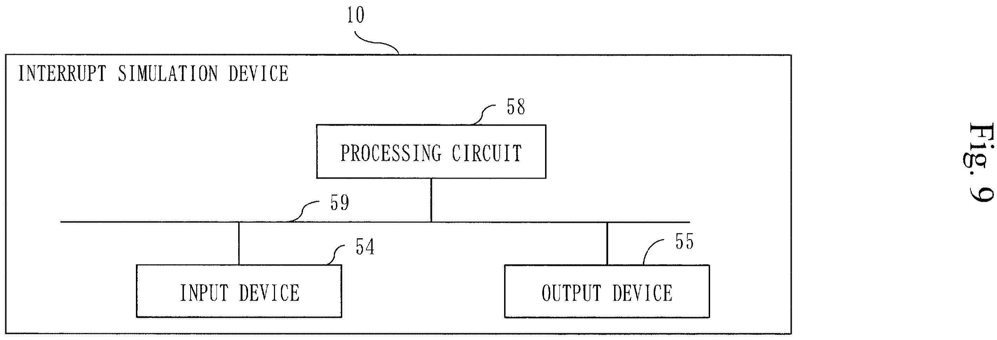

Fig. 9 illustrates an example of a hardware configuration of the interrupt simulation device 10 according to the present variation.

The interrupt simulation device 10 is equipped with a processing circuit 58 instead of the processor 51, the processor 51 and the memory unit 52, the processor 51 and the secondary storage device 53, or the processor 51, the memory unit 52 and the secondary storage device 53.

The processing circuit 58 is a hardware component that realizes at least a part of each part equipped in the interrupt simulation device 10.

The processing circuit 58 can either be a dedicated hardware component, or a processor that executes a program stored in the memory unit 52.

When the processing circuit 58 is a dedicated hardware component, the processing circuit 58 is, for instance, a single circuit, a composite circuit, a programmed processor, a parallel-programmed processor, an ASIC (Application Specific Integrated Circuit), an FPGA (Field Programmable Gate Array), or any combination thereof.

The interrupt simulation device 10 may be equipped with multiple processing circuits to replace the processing circuit 58. These multiple processing circuits share the role of the processing circuit 58.

In the interrupt simulation device 10, some functions may be realized by a dedicated hardware component, while the remaining functions may be realized by software or firmware.

The processing circuit 58 is, for instance, realized by hardware, software, firmware, or a combination thereof.

The processor 51, the memory unit 52, the secondary storage device 53 and the processing circuit 58 are collectively referred to as "processing circuitry". That is, the functions of each functional component of the interrupt simulation device 10 is realized by the processing circuitry.

### *** Other Embodiment ***

Although description has been made on First Embodiment, it is also permissible to implement various parts of the present embodiment in combination. Alternatively, it is also acceptable to partially implement the present embodiment. Otherwise, it is also possible to variously change the present embodiment as needed, and to implement the present embodiment as a whole, or partially, in any combination.

Note that the embodiment described above is an essentially preferable example, and is not intended to limit the present disclosure, the applications and the scope of use thereof. The procedures described using the flowcharts, etc. may be changed appropriately.

### Reference Signs List

10: interrupt simulation device; 11: division unit; 12: estimation unit; 13: definition addition unit; 14: accumulation addition unit; 15: branch addition unit; 20, 21, 22: target program; 28: configuration file; 29: processed program; 51: processor; 52: memory unit; 53: secondary storage device; 54: input device; 55: output device; 58: processing circuit; 59: bus.

## Claims

1. An interrupt simulation device comprising:
an accumulation addition unit to add an accumulation addition process to add a value corresponding to an estimated execution time of a target basic block to a counter variable corresponding to a cumulative execution time of a target program when the target basic block is executed in the target program in a case in which each basic block of a plurality of basic blocks is regarded as the target basic block when the target program being a computer program is divided into the plurality of basic blocks, and
a branch addition unit to add a conditional branching process that is performed when a value of the counter variable satisfies an ignition reference condition, to the target program.

2. The interrupt simulation device as defined in claim 1, wherein the target program is an embedded program.

3. The interrupt simulation device as defined in claim 1 or claim 2, wherein the accumulation addition unit adds an accumulation addition process corresponding to the target basic block at an end of the target basic block, and
the branch addition unit adds the conditional branching process to an end of a basic block corresponding to the conditional branching process.

4. The interrupt simulation device as defined in any one of claim 1 through claim 3, wherein the ignition reference condition is a condition indicated in a configuration file.

5. The interrupt simulation device as defined in any one of claim 1 through claim 4, wherein the counter variable is a global variable.

6. An interrupt simulation method comprising:
by a computer, adding an accumulation addition process to add a value corresponding to an estimated execution time of a target basic block to a counter variable corresponding to a cumulative execution time of a target program when the target basic block is executed in the target program in a case in which each basic block of a plurality of basic blocks is regarded as the target basic block when the target program being a computer program is divided into the plurality of basic blocks, and
by the computer, adding a conditional branching process that is performed when a value of the counter variable satisfies an ignition reference condition, to the target program.

7. An interrupt simulation program to cause an interrupt simulation device being a computer to perform:
an accumulation addition process to add an accumulation addition process to add a value corresponding to an estimated execution time of a target basic block to a counter variable corresponding to a cumulative execution time of a target program when the target basic block is executed in the target program in a case in which each basic block of a plurality of basic blocks is regarded as the target basic block when the target program being a computer program is divided into the plurality of basic blocks, and
a branch addition process to add a conditional branching process that is performed when a value of the counter variable satisfies an ignition reference condition, to the target program.
